# EUROPEAN PATENT APPLICATION

(11) **EP 4 685 588 A1**
(43) Date of publication of application: **28.01.2026**
(21) Application number: 24190810.2
(22) Date of filing: 25.07.2024
(51) Int. Cl.: G05B 19/042, G06F 8/41, G06F 8/71, G06F 21/64, H04L 9/40

(54) **METHOD FOR OPERATING A SAFETY CONTROLLER - TOOLCHAIN**

(71) Applicant: ABB Schweiz AG, 5400 Baden (CH)
(72) Inventor: Kaufleitner, Franz, 5122 Hochburg-Ach (AT); Dirschlmayr, Thomas, 5301 Eugendorf (AT); Dechant, Franz, 5121 Tarsdorf (AT); Greil, Bernhard, 4780 Schärding (AT); Thiemann, Bernd, 4910 Ried im Innkreis (AT); Kratzer, Nino, 5020 Salzburg (AT); Novosel, Florian, 8010 Graz (AT)
(74) Representative: Patentanwälte Pinter & Weiss OG

(57) **Abstract**

To provide a safety-related engineering system (1) that allows for the integration of non-safety-related software tools, a program file (PF) and a fingerprint object (FP) associated with the program file (PF) are provided at an update time point (tu), a consistency check between the program file (PF) and the fingerprint object (FP) is performed at a checking time point (tc) after the update time point (tu), and, at a transfer time point (tt) after the checking time point (tc), in case the consistency check confirmed a consistency between the program file (PF) and the fingerprint object (FP), said program file (PF) is compiled and linked to obtain an executable program code, which executable program code is transferred to a memory (ROM) of a safety controller (3) and executed by means of at least one processor (31) of said safety controller (3).

## Description

### Field of the invention

The present invention relates to a method for operating a safety controller, which has a plurality of inputs for receiving sensor signals, a plurality of outputs for outputting actuator signals, and at least one processor for executing program code, as well as to a programming tool for programming a safety controller and a safety-related engineering system comprising a safety controller.

### Background

Safety-related systems and/or applications must meet high requirements, particularly with regards to averting dangers to people, machinery, goods, etc. Safety-related systems are therefore planned and designed to operate robustly with regards to probabilistic and systematic faults. Definitions of said requirements can be found in the international IEC 61508 series of standard. IEC 61508 defines (functional) safety as a "part of the overall safety relating to the EUC (Equipment Under Control) and the EUC control system which depends on the correct functioning of the E/E/PE safety-related systems, other technology safety-related systems and external risk reduction facilities." The fundamental concept is that any safety-related system must work correctly or must only fail in a predictable (safe) way.

In mechanical engineering, engineering systems with a limited functionality range are oftentimes used to create, generate, and maintain safety-related systems, e.g. production lines or logistics systems or automatic assembly stations or test beds. By limiting the range of available functions, complexity is reduced and potentially dangerous functions are thus sorted out a priori, increasing safety and reliability of an engineering system, as well as allowing for simpler procedures for testing and validating a system.

An established option to achieve said reduction of complexity, in accordance with IEC 61508, is to use what is well-known as limited variability language ("LVL") to program, e.g., a control unit of an engineering system. When using LVL, it is allowed to limit the validation of the safety system to only a code review, simple testing and a wiring test. If LVL is not used, i.e., if the safety application is implemented in an engineering system without restrictions ("FVL" - full variability language), for example by programming in unrestricted "C" programming language, additional and oftentimes complex validation measures such as proof of the systematic integrity of the code, determination of the complexity of the code (complexity metrics), unit test with a code coverage of almost 100%, etc. must be carried out. Implementing and carrying out such additional, but necessary validation measures is time-consuming, cost-intensive and requires special IT expertise as well special IT infrastructure. For these reasons, LVL-based engineering systems are predominantly used for safety-related applications in mechanical engineering as well as in other engineering disciplines. As is well known from the prior art, LVL-based engineering systems are typically systems with closed architectures.

Unfortunately, closed architectures of LVL-based engineering systems and proprietary data formats for data storage oftentimes create challenges, e.g. when it comes to managing data, such as program files or parameter files etc., in version management systems like GIT. Particularly, users may find it difficult to include, exclude or modify individual elements, e.g. individual program files or individual parameter files, which results in reduced flexibility when handling LVL-based engineering systems in practice. Particularly proprietary data formats restrict the use of external tools. While the intention behind such restrictions is to prevent unauthorized access, scenarios exist where external access might be beneficial, for instance when searching for specific data or when attempting to modify just individual pieces of a complex software project running an engineering system. To summarize, engineering systems with closed architectures based on proprietary data formats typically limit the use of commercial of the shelf ("COTS") tools, preventing users from taking advantage of various, readily available and well-understood functionalities.

Another drawback that closed engineering systems are usually accompanied with is the need to manually start integrated functions like the generation of executable code by means of compilers, linkers, assemblers etc. This hinders the use of modern toolchains for compiling, linking and assembling applications. In practice, engineers typically use open toolchains like Jenkins or Artifactory for non-safety applications and would prefer to use these tools for safety applications as well. However, closed engineering systems known from the prior art do not allow for this flexibility.

### Summary

It is therefore an object of the present invention to provide a flexible and efficient safety-related engineering system that allows for the integration of non-safety related software tools.

To achieve said objective, the present invention suggests a method for operating a safety controller, which has a plurality of inputs for receiving sensor signals, a plurality of outputs for outputting actuator signals, and at least one processor for executing program code. The method according to the invention comprising at least three steps:
First, at an update time point, at least one program file and a fingerprint object associated with the program file are provided, the program file defining logical dependencies between the sensor signals and the actuator signals, the fingerprint object identifying said logical dependencies as provided at the update time point. Second, at a checking time point after the update time point, a consistency check between the program file and fingerprint object is performed. Third, at a transfer time point after the checking time point, in case the consistency check confirmed a consistency between the program file and the fingerprint object, by means of a compiler, said program file is compiled and linked to obtain an executable program code, the executable program is transferred code to a memory of the safety controller, and the executable program code is executed by means of the at least one processor, generating the actuator signals as a function of the sensor signals.

The method according to the invention solves the objective set out above, and, moreover, provides for a series of advantages. Specifically, safety-related data, in the present context in particular safety-related program files, can be stored in open text format, preferably XML or JSON or XLS or TXT. The data is thus visible and readable also from outside an LVL-based engineering system, yet the safety-sensitive data is still protected against accidental and/or deliberate manipulation after the update time point, due to the fingerprint objects assigned to the program files, which allows to detect changes in a program file, i.e. inconsistencies between the fingerprint object and the program file, preferably with a probability prescribed by the IEC 61508 SIL 1 standard or by the by the IEC 61508 SIL 2 standard or by the by the IEC 61508 SIL 3 standard or by the by the IEC 61508 SIL 4 standard. However, the possibility to store program files open text format does not require to necessarily store all program files present in an application in open text format exclusively. Still, at least one program file, or also a multiple of program files, of the plurality of program files may still be written in a limited variability language, allowing to choose the format depending on the contents and the specifics of a specific program file.

Moreover, as will be discussed below, in the event of deliberate manipulation, in particular after the update time point, the process offers the option of still transferring the modified data to the processors, despite inconsistencies. The method according to the invention allows a user to decide whether he or she still wants to proceed with creating executable program code even in cases where an inconsistency has been detected, which is particularly helpful in cases of minor, thus only insignificant inconsistencies that do not affect the safety of a system. In a preferred embodiment, the method according to the invention supports a user in deciding whether the change can be accepted from a safety point of view. In this context, it is to be mentioned that in practice, deliberate changes of a program file are oftentimes carried out by means of external tools, which are not part of a programming tool or an engineering system according to the invention. For example, an external tool may be used to edit parameters. Also in such a case, inconsistencies can be found by means of the method according to the invention, and a user can be given the option of accepting (deliberate) changes or not. For the user to be able to arrive at an educated decision, differences between a program file that is checked and a backup file of such a program file may be presented, in case such a backup exists.

In practice, a plurality of program files is typically provided at the update time point, due to the complexity of tasks that usually need to be performed by modern day engineering systems, typically requiring many program files, which together form an engineering project. In such a case, within the scope of the invention, each program file of the plurality of program files has an associated fingerprint object identifying the program file, and each program file is checked for consistency with its associated fingerprint object at said checking time point.

For the case of a plurality of program files being provided, it was found to be particularly beneficial to additionally provide a parts list, i.e., a list of program files belonging to a project / application / system etc. Within the scope of the invention, also such a parts list may be protected by means of a fingerprint object. A parts list with its own fingerprint object is especially helpful to avoid and react to situations where files are removed by accident or where consistent program files are replaced by older versions of the program file. In case program files are managed by means of a version management system like GIT, it can happen that a multiple of program files (a "branch" of a project) is replaced by an older or younger version of the program files. A parts list protected by a fingerprint object allows to detect such mismatches.

Functions to be implemented in said program files, can, in particular, be safety functions, preferably selected from the group consisting of the safety functions Safe Torque Off (STO), Safe Torque Off One Channel (STO1), Safe Operation Stop (SOS), Safe Stop 1 (SS1), Safe Stop 2 (SS2), Safely Limited Speed (SLS), Safe Maximum Speed (SMS), Safe Direction (SDI), Safely Limited Increment (SLI), Safely Limited Acceleration (SLA), Safe Brake Control (SBC), Safely Limited Position (SLP), Safe Maximum Position (SMP), Safe Brake Test (SBT), Remanent Safe Position (RSP) etc. However, a program file may as well be a parameter file, assigning values to parameters which are needed to run an engineering system, like maximum torque values or maximum current values or maximum speed values or maximum acceleration values or maximum voltage values etc., but also functions unrelated to functional safety may be implemented in a program file, such as algorithms to analyze measured data. As it is typically the case in practice, said safety functions are executed not just once, but repeatedly, hence a potentially large number of times. Safety functions are thus usually organized in at least one periodic program task. As is well-known from the field of PLC programming, a frequency by which a such task is executed may be predefined in the form of a fixed sampling frequency, but may also be the result of a turnaround time of a task.

In case said program files comprise safety functions like the ones mentioned above, the program files typically process sensor signals generated by means of safety sensors, e.g. selected from the group consisting of light grids, light curtains, emergency stop buttons, safety limit switches, safety interlock switches, contactless safety magnetic switches, and contactless RFID safety sensors, creating an actuator signal according to the safety function.

In a particularly preferred embodiment of the invention, a fingerprint object of the provided fingerprint objects may encompass a description, preferably in the form of a signature, of the program file associated with the fingerprint object, preferably of metadata of the program file, or of metadata describing a last user, and/or of a date and/or time of a last change of the program file and/or of a reference to a last valid version. Especially a signature describing metadata of a program file proves to be a particularly efficient and compact way of capturing enough information to carry out the invention.

As mentioned at the outset, in case the consistency check at a checking time point does not confirm a consistency between the program file and the fingerprint object, a warning to a user may be provided and the generation of executable program code may be stopped, such that any potential harm or danger is avoided. However, the at least one inconsistency between the program file and the fingerprint object leading to the consistency check not confirming a consistency between the program file and the fingerprint object may also presented to a user and the user may be given the opportunity to decide whether the generation of executable program code should be continued or stopped, providing additional options to a user and, in particular, avoiding unnecessary stops of code generation in case only minor inconsistencies are present. Specifically, providing differences between a backup file of a program file and the program file itself has turned out to be a valuable aid in many use cases, helping users to decide if a change should be accepted or not.

Several methods may be employed to carry out the consistency check according to the invention. Specifically, the consistency check may be carried out by means of a method selected from the group consisting of cyclic redundancy check (CRC), Fletcher's checksum algorithm, one's complement addition, two's compliment addition, checking a checksum etc. Hence, an inconsistency may manifest itself in a checksum mismatch, or in a discrepancy between metadata stored in a fingerprint object and metadata of a program file, or in a discrepancy between a time stamp of a last change stored in a fingerprint object and time stamp of a last change of a program file.

The method according to the invention is preferably carried during commissioning or during maintenance of an engineering system, essentially when flashing a safety controller with new software and when an update of program files does not interfere with the operation of the engineering system.

Additionally, the object laid out above is achieved by a programming tool for programming a safety controller of a safety-related engineering system, which safety controller has a plurality of inputs for receiving sensor signals, a plurality of outputs for outputting actuator signals, and at least one processor for executing program code, the programming tool being designed to carry out the steps of, at an update time point, providing at least one program file and a fingerprint object associated with the program file, the program file defining logical dependencies between the sensor signals and the actuator signals, the fingerprint object identifying said logical dependencies as provided at the update time point; at a checking time point after the update time point, performing a consistency check between the program file and fingerprint object; at a transfer time point after the checking time point, in case the consistency check confirmed a consistency between the program file and the fingerprint object, by means of a compiler, compiling and linking said program file to obtain an executable program code, transferring the executable program code to a memory of the safety controller, enabling to execute the executable program code by means of the at least one processor, in order to generate the actuator signals as a function of the sensor signals.

In said programming tool, a code checker may be provided to carry out the consistency check according to the invention, and/or a configuration generator may be provided to parameterize and adapt the program file for a specific application, and/or a fingerprint generator may be provided to generate the fingerprint object, and/or a COTS tool may be provided to generate the program file, and/or a syntax checker for checking the syntax of the program file may be provided. Said components form a tool chain comprising said code checker and/or said configuration generator and/or said fingerprint generator and/or said COTS tool and/or said compiler and/or said binder and/or said syntax checker, which tool chain preferably complies with the IEC 61508 series of standard.

Further, also an application management system may be provided, the application management system providing data describing an assembly station, or a processing station, or a test station, or a conveyor unit, or a packaging and palletizing station, or a machine or another device being controlled by the safety controller, and, potentially additionally, a configuration generator may be provided to retrieve said data provided by the application management system and to use it to parameterize and adapt the program file for a specific application.

Moreover, the object set out above is also achieved by an engineering system comprising an engineering station, said programming tool, and a safety controller having a plurality of inputs for receiving sensor signals, a plurality of outputs for outputting actuator signals, and at least one processor for executing program code, the safety controller being designed to be operated by means of the programming tool in accordance with the method according to the invention.

### Detailed description

The present invention is described below in greater detail with reference to Figs.1 to 3, which show schematic and non-limiting advantageous embodiments of the invention by way of example. In the drawings:
Fig.1 shows a simplified representation of an engineering system controlled by a safety controller according to the invention,
Fig.2 shows a schematic representation of a safety controller,
Fig.3 shows a timeline of an implementation of the invention.

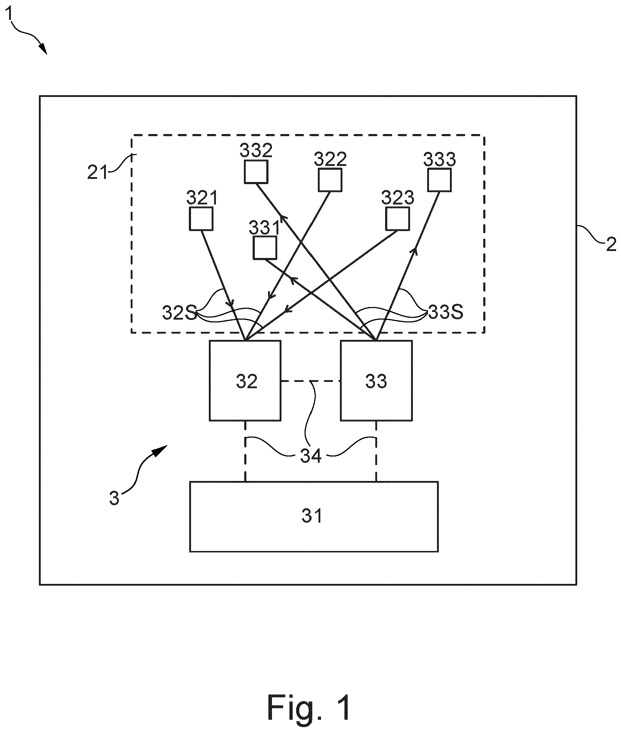

In Fig. 1 schematically shows a safety-related engineering system 1 which is controlled by means of a safety controller 3. The engineering system 1 comprises an engineering station 2, which may correspond to an assembly station, or to a processing station, or to a test station, or to a conveyor unit, or to a packaging and palletizing station. Of course, in an engineering system 1, also multiple engineering stations 2 are conceivable and oftentimes present in practice. By means of a multiple of engineering stations 2, complex sequencies of station-specific processing steps can be implemented. In that sense, a first processing step carried in a first engineering station 2 may be followed by a successive, second processing step carried in a second engineering station 2, the second step building on the outcome of the first step. For instance, a product may be assembled in an assembly station, and later be packaged in a packaging station. It is assumed hereafter that the steps carried out in the engineering station 2 at least partially constitute safety related processes, thus demanding special security measures, hence turning the engineering system 1 shown into a safety-related system 1.

The safety controller 3 represents a system of a potentially large number of hardware components, having in particular at least one programmable processor. The safety controller 3 may further comprise a sensor device 32 and an actuator device 33, as well as several software components, such as safety-related computer programs executed on the processor 31. In preferred embodiments of the engineering system 1, said sensor device 32 and actuator device 33 may be modularly assembled I / O devices to which a large number of different sensors 321, 322, 323 and actuators 331, 332, 333 can be connected, such as position sensors or switches, rotary encoders, temperature sensors, solenoid valves, contactors and / or electrical drives, the sensors 321, 322, 323 providing sensor signals 32S to the processor 31, the actuators 33 receiving actuator signals 33S from the processor 31. In further preferred embodiments, a processor 31 can form a combined assembly together with a modular sensor device 32 and an actuator device 33. As depicted in Fig.1, the processor 31, the sensor device 32 and the actuator device 33 are connected to one another via a communication network 34. Said communication network 34 may include an Ethernet-based bus system or a CAN-based bus system or another bus system, which bus systems are of course well-known from the prior art.

An engineering station 2 like the one shown in Fig.1 typically comprises a working area, in which said processing and / or working steps (assembling, packaging, cleaning, filling, testing, ...) are carried out. Such working areas are oftentimes secured, for example, by protective doors which only allow access in case an assigned control unit has controlled the station in a safe state. Alternatively, or in addition, light grids or light curtains can be used, and / or said engineering stations 2 can be provided with emergency stop buttons with which an engineering station 2 can be brought into a safe state, in particular by disconnecting the engineering station 2 from power supply or at least by disconnecting potentially dangerous components (actuators, tools, machines, ...) comprised in the engineering station 2 from power supply.

Protective doors, light grids, light curtains and emergency stop buttons are typical safety-related sensors whose output signals are logically linked to control safety-related actuators, such as contactors in the power supply path of a station 2. Said sensors 321, 322, 323 of a station 2 can include safety-related sensors as well as non-safety-related sensors, which non-safety-related sensors may be required to operate the engineering station 2, for example, detecting operational speeds, angles, positions or other signals. The actuators 331, 332, 333 can likewise include safety-related as well as non-safety-related actuators, in particular motors or actuating cylinders or conveyor belts or robot arms, etc. Employing such safety sensors and safety actuators, it becomes possible to implement safety functions such as Safe Torque Off (STO), Safe Torque Off One Channel (STO1), Safe Operation Stop (SOS), Safe Stop 1 (SS1), Safe Stop 2 (SS2), Safely Limited Speed (SLS), particularly with regards to the speed of joints of industrial robots, Safe Maximum Speed (SMS), Safe Direction (SDI), Safely Limited Increment (SLI), Safely Limited Acceleration (SLA), Safe Brake Control (SBC), Safely Limited Position (SLP), Safe Maximum Position (SMP), Safe Brake Test (SBT), Remanent Safe Position (RSP), or other safety functions, e.g. Safety Limited Torque (SLT), or Safely Limited Orientation of the Tool Center Point or Safe Limited Working Space for the robot, and many more. These safety functions are typically independent of one another, and are of course well-known from the prior art.

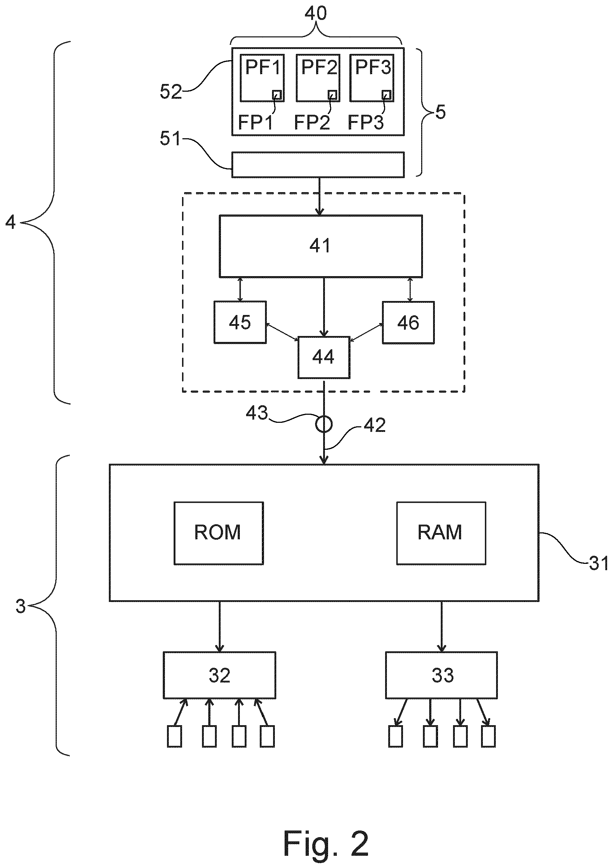

In Fig. 2, a safety controller 3, which may in particular be implemented in the form of a microprocessor or a microcontroller or an integrated circuit (ASIC, FPGA), is shown in detail, together with a programming tool 4. In preferred embodiments like the one shown, the programming tool 4 preferably comprises at least a computing unit 5, preferably a PC or a laptop or a mini-PC etc., on which a computer program 40, i.e., software, may be programmed. On a computing unit 5, a broad range of technology for programming a software can be employed, independent of an operating system (Windows, Unix, ...), e.g. Web Based Engineering tools etc. Within the scope of this invention, said computer program 40 comprises program files PF1, PF2, PF3 (in case of a general designation the reference sign "PF" is used), and the program files PF1, PF2, PF3 typically comprise safety functions like the ones listed above. A program file PF hence contains code, but can also contain parameters. In case of a safety-related engineering system 1 having a drive system as an actuator, a safety function contained in a program file PF can, e.g., be Safely Limited Speed (SLS), and a program file PF can contain parameters to parameterize this safety function, hence setting values for parameters like a speed limit, a maximum deceleration, etc. Thus, a programming tool 4 supports creating "code", but also allows to assign values to parameters needed to operate the engineering system 1.

In a preferred embodiment, the programming tool 4 may provide a program editor 51 and a display 52, enabling a user to write said computer program 40 for the safety controller 3, typically in a programming language that suits the needs of a given application. As mentioned at the outset, in the present case, particularly limited variability languages (LVL) are used to write a computer program 40 and hence program files PF. By means of said programming language, it becomes possible to define safety functions SF1, SF2... which define logical dependencies between selected sensor signals 32S and selected actuator signals 33S.

The programming tool 4 further includes a compiler 41, with the aid of which a program file PF created in a higher programming language, particularly LVL (limited variability languages), can be translated into a machine-readable machine code that can be executed by the processor 31. Further, also a binder or a linker 44 is typically provided, with the aid of which several code parts, e.g. from different libraries that have been called by reference, can be combined to form executable program code for the processor 31. Typically, a binder or linker 44 combines a plurality of pieces of code into an executable program code 42, which is then sent to a processor 31 to be executed. Elements of the programming tool 4, i.e., the compiler 41, the binder or linker 44, said interface 43, etc., constitute a software toolchain for providing executable program code to the processors 31. In case a program file PF contains parameters and values assigned to such parameters, as discussed earlier, "compiling" with regards to these parameters means to convert a parameter from a "readable format" into a binary format so that the parameter can be use when operating an engineering system 1. "Linking" in such a case means to put a potentially multiple of parameter files together.

Usually, the programming tool 4 has an interface 43, via which the executable program code 42 can be transferred to a memory ROM of the processor 31. In preferred exemplary embodiments, the memory ROM is a non-volatile memory, for example in the form of an EEPROM. Additionally, which is frequently the case in practice, a second, volatile memory RAM may be provided in the processors 31b as well. In such a case, the programming tool 4 may be equipped with a further interface, via which said volatile memory RAM may be accessed. Compilers 41, linkers and binders 44 are of course well-known from the prior art, cf., e.g., US 10, 152,309 B2. In preferred embodiments, the interface for programming and the programming tool 4 can be designed separately. This has the advantage that no programming tool 4 and no source code, etc. are required to program the controller. It is sufficient if the machine-readable code is available and the interface is able to transfer this code to a correct controller 31. This design offers advantages, particularly in the case of maintenance, when a defective controller 31 is replaced by a device from the warehouse that has not yet been programmed, because no programming tool 4, no source code, and no experts are required in the case of maintenance, and solely the controller 31 can be exchanged.

As mentioned at the outset, closed architectures, particularly of LVL-based engineering systems, and proprietary data formats create challenges when it comes to managing data, mainly due to the fact that version management systems like GIT cannot be employed. In particular, users struggle when including individual elements into an engineering project, because the prior art only allows to change an entire project and does not allow to access individual parts of a project, but also with limited flexibility, as well as with a typically strongly restricted use of external tools. This lack of flexibility in closed engineering systems prevents users from taking advantage of readily available functionalities.

To overcome these problems, the present invention provides for a method for programming a safety controller 3, comprising the steps of, at an update time point tu, providing at least one program file PF and a fingerprint object FP associated with the program file PF, the program file PF defining logical dependencies between the sensor signals 32S and the actuator signals 33S, the fingerprint object FP identifying said logical dependencies as provided at the update time point tu, at a checking time point tc after the update time point tu, performing a consistency check between the program file PF and fingerprint object FP, at a transfer time point tt after the checking time point tc. In case the consistency check confirmed a consistency between the program file PF and the fingerprint object FP, by means of a compiler 41, compiling and linking said program file PF to obtain an executable program, transferring the executable program code to a memory ROM of the safety controller 3, executing the executable program code by means of the at least one processor 31a, in order to generate the actuator signals 33S as a function of the sensor signals 32S.

The method according to the invention provides for a series of benefits. First, it becomes possible to write safety-related program files in open text format, preferably XML, JSON, XLS, or TXT, hence deviating from LVL, because the fingerprint object FP provides for sufficient security, allowing for visibility and readability outside of an LVL-based engineering system, while still keeping the system safe. This ensures protection against accidental or intentional tampering, i.e., modifications and/or manipulations. Depending on the chosen algorithm (security mechanism, signature, etc.) to create said fingerprint objects, the process may consider cyber security aspects as well. In this context, it is even conceivable to write all program files PF used in open text format, but of course also to write at least one program file PF of the plurality of program files PF in a limited variability language LVL.

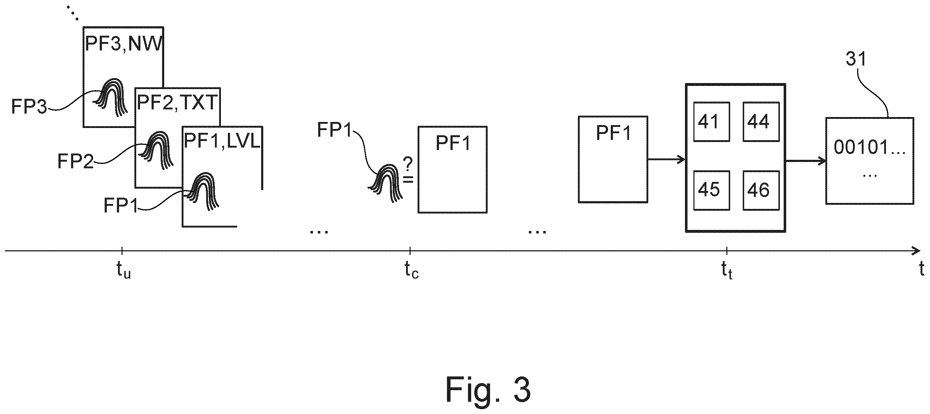

A basic timeline representing the basic steps of the method outlined above, is shown in Fig.3. This simply structured timeline hints towards a series of flexible design options. Specifically, in preferred embodiments and as shown in Fig.3, a plurality of program files PF1, PF2, PF3 may be provided, each program file PF1, PF2, PF3 of the plurality of program files PF1, PF2, PF3 having an associated fingerprint object FP1, FP2, FP3 identifying the program file PF, such that each program file PF can be checked for consistency with its associated fingerprint object FP at said checking time point tc.

To allow for an identification of a program file PF by a fingerprint object FP, the fingerprint object FP preferably encompasses a signature that describes a data content of an associated program file PF, allowing to detect a change of program file PF with a probability required for IEC 61508 SIL 3, and/or metadata of the program file PF, preferably metadata describing a last user, a date and/or time of change of the program file PF and/or a reference to a last valid version.

In further, particularly preferred embodiments of the invention, the fingerprint object may also include a safeguard system to guarantee the accurate tool sequence. In a simplified scenario, the safeguard system for the sequence might just be a number saved in the signature, and at each processing (compiling, linking, etc.) step, a number representative of the processing step may be computed anticipates a maximum number. If a processing step begins and an interim result provided has a number greater than a specified maximum number, an error in the processing step can be identified. In case the consistency check does not confirm a consistency between the program file PF and the fingerprint object FP, a warning to a user may be provided, or the generation of executable program code may be stopped in its entirety, to allow for maximum safety.

In a preferred fashion, the inconsistencies, or the at least one inconsistency between the program file PF and the fingerprint object FP leading to the consistency check not confirming the consistency between the program file PF and the fingerprint object FP, may also be presented to a user first, before code generation is stopped, allowing a user to enable a continuation of a code generation process, in case a detected inconsistency should only be a minor inconsistency. The last-mentioned aspect of allowing a user to decide whether code generation should be stopped or continued even in spite of a detected inconsistency provides a basis for a series of further, particularly beneficial embodiments of the invention. In such a scenario, a safety-related decision process may be activated and carried out in cooperation with a user or an engineer handling the engineering system. Specifically, detailed information about the inconsistency may be provided to the user, e.g., the differences between a backup file and a program file PF that is checked, and a suggestion may be made on how significant the inconsistency is. In case it is found, e.g., by the compiler 41 or by the linker 44 or by another software component in the toolchain presented in Fig.2, that a detected inconsistency is so small that the overall safety of a safety-related engineering system is not affected, it may be suggested to the user, e.g., via the display 52, that the code generation process may be continued. However, it is important that the decision is eventually made by a user, and not by a software tool itself.

Also in case a signature is encompassed in a fingerprint object FP and in case the signature does not match the data content of the program file PF it describes, a user may be notified of a signature mismatch. The user may then be provided with the the options of accepting the inconsistency, or of amending the inconsistency first and only then moving forward with code generation, or of rejecting the inconsistency and, preferably, using a last valid version. Such a last valid version may be stored in a version management system, e.g., GIT, and loaded therefrom, which again points to the main advantage of the invention that COTS tools like version management tools may be used also in a safety-related environment. This makes it much easier also to deal with the inconsistencies laid out above. To find said last valid version, it is beneficial to provide a link to the location where such a last valid version is stored. Hence, in a particularly preferable manner, said link may be provided in a fingerprint object FP itself, which makes retrieving a last valid version simple and convenient.

Several options exist to perform a consistency check referred to above. In a preferred fashion, the consistency check may be carried out by means of method selected from the group consisting of cyclic redundancy check CRC, Fletcher's checksum algorithm, one's complement addition, two's compliment addition. Another option to perform a consistency check is to provide a program file PF containing parameters that describe types of sensors and actuators needed in an application, and to check whether such sensors and actuators are in fact present.

In addition to a consistency check checking (solely) for consistency between a fingerprint object FP and a program file PF, a program file PF may also be checked for compliance with requirements resulting from specific use cases the program file is applied to. For instance, it may be checked whether maximum values used in a safety function SF implemented in a program file holds correct limit values, of it may be checked whether a data format used in a program file PF complies with format requirements etc. It may as well be checked whether all steps in a toolchain have been carried out correctly, e.g., it may be checked whether all transitions between a compiler 41 and a linker 44 have been performed correctly etc. In this fashion, an application can be automatically adjusted according to application specific (oftentimes "order-related") data. Additionally, by securing each individual object, i.e. program file PF, of an application with the fingerprint object FP, the validation process becomes more straightforward, structured, and less error-prone. This allows users to easily identify which objects have been altered and which remain unchanged, providing an excellent basis for influence analysis.

As laid out above, to carry out the steps according to the method of the invention, a programming tool 4 may be used. Within the scope of the invention, also a programming tool 4 according to the discussion above, also a programming tool 4 may be adapted in various advantageous ways, of which some are presented below.

Specifically, in a programming tool 4 to carry out the steps according to the invention, a code checker 45 may be provided to carry out the consistency check, or a configuration generator 46 may be provided to parameterize and adapt the program file PF for a specific application (e.g., maximum torque values or maximum speed values or maximum force values may prescribed by a configuration generator 46), or a fingerprint generator is provided to generate the fingerprint object FP, or a COTS tool is provided to generate the program file PF, or a syntax checker for checking the syntax of the program file PF is provided.

As discussed previously, the components of a programming tool 4 constitute a tool chain, which in case of a programming tool 4 having a code checker 45 and a configuration generator 46 may of course also comprise these components, but also additionally a fingerprint generator and/or a COTS tool. In case the components of such a tool chain comply with the IEC 61508 standard, of course also the entire tool chain complies with the IEC 61508 standard, which is of course particularly advantageous in the context of safety related systems, as a code generation toolchain in the present context of course needs to be qualified for safety-related applications. This qualification should meet the requirements for LVL, ensuring that users can rely on the toolchain to operate without errors. In case of a tool chain where already all the components comply with IEC 61508, unlike FVL, there is no need for additional V&V (verification and validation) activities like unit tests with 100% code coverage. These activities in FVL are typically used to identify toolchain errors. To ensure a realistic timeframe for qualifying the toolchain for LVL, however, restrictions may need to be placed on language elements in the source code.

An important example of a COTS tool is a Jenkins pipeline, as known, e.g., from US 11,347,806 B2 or from CN 111443940 A. A Jenkins pipeline can activate, e.g., a command line interface to start a process. It may include a validation process to ensure the successful execution of compiling and linking. Generally, it oftentimes turns out to be highly beneficial to incorporate customer-specific tools into the toolchain. By opening the toolchain, users can integrate their own tools for specific customizations, such as modifying parameters for a particular machine type.

Besides the components discussed so far, also an application management system may be provided as another part of a programming tool, the application management system providing data describing an assembly station, or a processing station, or a test station, or a conveyor unit, or a packaging and palletizing station, or a machine or another device being controlled by the safety controller. In such a scenario, a configuration generator 46, may be provided to retrieve said data from the application management system and use it to parameterize and hence specifically adapt a program file PF for a specific application

Also if a user operates any of the tools of a tool chain incorrectly, safety-critical issues due to improper use may be the outcome. Examples for an incorrect use are, e.g., starting tools in an incorrect order, altering intermediate results before passing them to the next tool, or mixing up results from different projects. Also errors of this kind may be detected by means of the invention.

## Claims

1. A method for operating a safety controller (3), which has a plurality of inputs for receiving sensor signals (32S), a plurality of outputs for outputting actuator signals (33S), and at least one processor (31) for executing program code, the method comprising the steps of:
- at an update time point (tu), providing at least one program file (PF) and a fingerprint object (FP) associated with the program file (PF), the program file (PF) defining logical dependencies between the sensor signals (32S) and the actuator signals (33S), the fingerprint object (FP) identifying said logical dependencies as provided at the update time point (tu);
- at a checking time point (tc) after the update time point (tu), performing a consistency check between the program file (PF) and fingerprint object (FP);
- at a transfer time point (tt) after the checking time point (tc), in case the consistency check confirmed a consistency between the program file (PF) and the fingerprint object (FP),
∘ by means of a compiler (41), compiling and linking said program file (PF) to obtain an executable program code,
∘ transferring the executable program code to a memory (ROM) of the safety controller (3),
∘ executing the executable program code by means of the at least one processor (31), in order to generate the actuator signals (33S) as a function of the sensor signals (32S).

2. The method according to claim 1, **characterized in that** a plurality of program files (PF) is provided at the update time point (tu), each program file of the plurality of program files (PF) having an associated fingerprint object (FP) identifying the program file (PF), and each program file (PF) being checked for consistency with its associated fingerprint object (FP) at said checking time point (tc).

3. The method according to claim 2, **characterized in that** at least one program file (PF) of the plurality of program files (PF) is written in an open text format, preferably XML or JSON or XLS or TXT.

4. The method according to claim 2 or 3, **characterized in that** at least one program file (PF) of the plurality of program files (PF) is written in a limited variability language (LVL).

5. The method according to any one of the previous claims, **characterized in that** a fingerprint object (FP) of the provided fingerprint objects (FP) encompasses a description, preferably in the form of a signature, of the program file (PF) associated with said fingerprint object (FP), allowing to detect a change of the program file (PF) associated with the fingerprint object (FP) and/or of metadata of the program file (PF), preferably metadata describing a last user, and/or of a date and/or time of a last change of the program file (PF) and/or of a reference to a last valid version.

6. The method according to any one of the previous claims, **characterized in that** the fingerprint object (FP) allows to detect a change with a probability prescribed by the IEC 61508 SIL 1 standard or by the by the IEC 61508 SIL 2 standard or by the by the IEC 61508 SIL 3 standard or by the by the IEC 61508 SIL 4 standard.

7. The method according to any one of the previous claims, **characterized in that,** in case the consistency check does not confirm a consistency between the program file (PF) and the fingerprint object (FP), a warning to a user is provided and the generation of executable program code is stopped, **or in that,** in case the consistency check does not confirm a consistency between the program file (PF) and the fingerprint object (FP), the at least one inconsistency between the program file (PF) and the fingerprint object (FP) leading to the consistency check not confirming a consistency between the program file (PF) and the fingerprint object (FP) is presented to a user and the user is given the opportunity to decide whether the generation of executable program code should be continued or stopped or **in that,** in case an inconsistency is detected, a list of changes between the program file (PF) and an associated back-up of the program file (PF) is provided.

8. The method according to any one of the previous claims, **characterized in that** the consistency check is carried out by means of a method selected from the group consisting of cyclic redundancy check (CRC), Fletcher's checksum algorithm, one's complement addition, two's compliment addition, **and/or in that** in addition to said consistency check, the program file (PF) is checked for compliance with a set of requirements resulting from a use case the program file (PF) is applied to.

9. The method according to any one of the previous claims, **characterized in that** at least one safety function (SF1, SF2) is implemented in the program file (PF), said safety function (SF1, SF2) preferably selected from the group consisting of the safety functions Safe Torque Off (STO), Safe Torque Off One Channel (STO1), Safe Operation Stop (SOS), Safe Stop 1 (SS1), Safe Stop 2 (SS2), Safely Limited Speed (SLS), Safe Maximum Speed (SMS), Safe Direction (SDI), Safely Limited Increment (SLI), Safely Limited Acceleration (SLA), Safe Brake Control (SBC), Safely Limited Position (SLP), Safe Maximum Position (SMP), Safe Brake Test (SBT), Remanent Safe Position (RSP).

10. The method according to any one of the previous claims, **characterized in that** said program files (PF) process sensor signals (32S) generated by means of a safety sensor selected from the group consisting of light grids, light curtains, emergency stop buttons, safety limit switches, safety interlock switches, contactless safety magnetic switches, and contactless RFID safety sensors, creating an actuator signal (33S) according to the safety function (SF1, SF2).

11. Programming tool (4) for programming a safety controller (3) of a safety-related engineering system (1), which safety controller (3) has a plurality of inputs for receiving sensor signals (32S), a plurality of outputs for outputting actuator signals (33S), and at least one processor (31) for executing program code, the programming tool (4) being designed to carry out the steps of:
- at an update time point (tu), providing at least one program file (PF) and a fingerprint object (FP) associated with the program file (PF), the program file (PF) defining logical dependencies between the sensor signals (32S) and the actuator signals (33S), the fingerprint object (FP) identifying said logical dependencies as provided at the update time point (tu);
- at a checking time point (tc) after the update time point (tu), performing a consistency check between the program file (PF) and fingerprint object (FP);
- at a transfer time point (tt) after the checking time point (tc), in case the consistency check confirmed a consistency between the program file (PF) and the fingerprint object (FP),
∘ by means of a compiler (41), compiling and linking said program file (PF) to obtain an executable program code,
∘ transferring the executable program code to a memory (ROM) of the safety controller (3), enabling to execute the executable program code by means of the at least one processor (31a), in order to generate the actuator signals (33S) as a function of the sensor signals (32S).

12. Programming tool (4) according to claim 11, **characterized in that** a code checker (45) is provided to carry out the consistency check **and/or in that** a configuration generator (46) is provided to parameterize and adapt the program file (PF) for a specific application **and/or in that** a fingerprint generator is provided to generate the fingerprint object (FP) **and/or in that** a COTS tool is provided to generate the program file (PF) **and/or in that** a syntax checker for checking the syntax of the program file (PF) is provided.

13. Programming tool (4) according to claim 12, **characterized in that** a code generation tool chain is provided, the tool chain comprising said code checker (45) and/or said configuration generator (46) and/or said fingerprint generator and/or said COTS tool and/or said compiler and/or said binder and/or said syntax checker, said tool chain preferably complying with the IEC 61508 series of standard.

14. Programming tool (4) according to any one of claims 11 to 13, **characterized in that** an application management system is provided, the application management system providing data describing an assembly station, or a processing station, or a test station, or a conveyor unit, or a packaging and palletizing station, or a machine or another device being controlled by the safety controller, **and in that** a configuration generator (46) is provided to retrieve said data provided by the application management system and to use it to parameterize and adapt the program file (PF) for a specific application.

15. Engineering system (1) comprising an engineering station (2), a programming tool (4) according to any one of claims 11 to 14, and a safety controller (3) having a plurality of inputs for receiving sensor signals (32S), a plurality of outputs for outputting actuator signals (33S), and at least one processor (31a) for executing program code, the safety controller (3) being designed to be programmed by the programming tool (4).
